Europäisches Patentamt

European Patent Office

Office européen des brevets

(19)

(11) Numéro de publication: **0 469 176 B1**

## (12) FASCICULE DE BREVET EUROPEEN

(45) Date de publication de fascicule du brevet: **05.04.95**   (51) Int. Cl.⁶: **A23J 3/04**, A23J 3/14, A23J 3/16

(21) Numéro de dépôt: **90114915.3**

(22) Date de dépôt: **03.08.90**

---

(54) **Procédé d'obtention d'un produit coagulé déshydraté.**

---

(43) Date de publication de la demande:
**05.02.92 Bulletin 92/06**

(45) Mention de la délivrance du brevet:
**05.04.95 Bulletin 95/14**

(84) Etats contractants désignés:
**AT BE CH DE DK ES FR GB GR IT LI LU NL SE**

(56) Documents cités:
**GB-A- 1 274 905**
**US-A- 4 664 924**

**Hawley's Condensed Chemical Dictionary,**
**11th. ed., Van Nostrand Reinhold Company,**
**new york, p. 289**

(73) Titulaire: **SOCIETE DES PRODUITS NESTLE**
**S.A.**
**Case postale 353**
**CH-1800 Vevey (CH)**

(72) Inventeur: **Thomas, Remi**
**11, rue Neuve**
**F-60390 Berneuil en Bray (FR)**

---

**Description**

La présente invention est relative à un procédé d'obtention d'un produit coagulé déshydraté. La présente invention a plus particulièrement pour objet un procédé du type ci-dessus dans lequel le produit à traiter est à base d'oeufs ou de légumineuses telles que par exemple le pois et le soja.

Il est en effet utile dans l'industrie agro-alimentaire de pouvoir disposer de garnitures coagulées déshydratées qui peuvent ensuite être réincorporées dans un plat principal pour donner ensuite un produit fini par simple réhydratation et réchauffage éventuel, les garnitures coagulées déshydratées devant par ailleurs présenter des qualités de conservation suffisantes.

Il est ainsi connu de proposer des garnitures à base d'oeufs dans lesquelles des oeufs, après avoir été battus en omelette sont cuits, donc coagulés, puis déshydratés.

Pour obtenir un produit qui peut ensuite être instantanément reconstitué, il faut que la porosité du produit déshydraté soit suffisante pour assurer une migration rapide de l'eau lors de la réhydratation.

Ceci peut être obtenu par un traitement de lyophilisation qui, figeant la forme du produit coagulé, permet d'obtenir un produit déshydraté final présentant une porosité suffisante pour autoriser une réhydratation rapide.

Malheureusement, le traitement par lyophilisation est très onéreux, la conduite des installations est délicate et, les échanges thermiques étant d'un faible rendement, la taille des installations est importante.

Or, si on veut s'affranchir du traitement par lyophilisation, il apparaît que un séchage sous vide ou un séchage à l'air chaud, par exemple, ne permettent pas d'obtenir un produit satisfaisant, celui-ci étant trop compact et nécessitant un temps de cuisson de plusieurs minutes ou bien, au contraire, le produit obtenu étant insuffisamment sec, la croûte formée empêchant la migration de l'eau.

GB-A1-1274 905 décrit un procédé selon lequel on traite divers produits pulvérulents à l'état sec au moyen d'air humide, en vue de la préparation d'un produit aggloméré facile à disperser dans l'eau. Selon cette technique, on vise uniquement l'adhésion mécanique des particules ainsi agglomérées, phénomène réversible à volonté.

Dans le cas de la présente invention, on cherche principalement à conserver de façon irréversible la structure des ingrédients protéiques mis en jeux, d'où une opération de coagulation en présence d'air humide, conduite de sorte à conserver intacte la structure poreuse des matières premières protéiques préalablement déshydratées.

La présente invention a donc pour but un procédé d'obtention d'un produit coagulé déshydraté qui présente des caractéristiques de réhydratation satisfaisante permettant d'obtenir un produit final comparable à un produit frais.

La présente invention a aussi pour but un procédé du type décrit ci-avant dans lequel il est possible de maîtriser parfaitement le taux de coagulation du produit.

La présente invention a ainsi pour objet un procédé d'obtention d'un produit coagulé déshydraté tel que défini à la revendication 1.

Par air humide on entend aussi bien un mélange d'air et de vapeur que de la vapeur au sens strict.

Ainsi le procédé consiste essentiellement à sécher la matière première non coagulée en lui conférant une structure poreuse et à conserver cette porosité initiale lors de la coagulation ce qui permet ainsi d'obtenir un produit final coagulé déshydraté facilement réhydratable.

Dans le procédé selon la présente invention la déshydratation peut être réalisée par microondes sous pression réduite.

Ce traitement aux microondes permet de maîtriser totalement le foisonnement du produit et donc sa porosité, il permet donc de contrôler parfaitement les caractéristiques de réhydratation du produit final tout en conservant intactes les propriétés des protéines.

La coagulation étant réalisée à l'air humide, une partie de la vapeur présente dans cet air humide condense sur le produit déshydraté, ceci permet la coagulation des protéines.

Cette coagulation est réalisée sans modification de la structure des morceaux déshydratés qui conservent leur porosité.

D'autres caractéristiques et avantages ressortiront à la suite de la description qui va suivre dans laquelle les pourcentages sont exprimés par rapport au poids.

Une matière première, qui peut être constituée d'oeufs frais, peut être homogénéisée avec un mélangeur à pale ou à hélice.

Il peut s'agir d'un mélange respectant les proportions naturels de blanc et de jaune, mais il peut aussi être enrichi en blanc ou en jaune. Le mélange, avant déshydratation, peut être ainsi concentré par exemple en incorporant des oeufs en poudre.

D'autres ingrédients peuvent aussi être ajoutés sous forme poudreuse ou sous forme liquide. Au cours de la phase d'homogénéisation il peut être intéressant de limiter l'incorporation d'air afin de limiter le foisonnement lors de la déshydratation ultérieure.

Le mélange ainsi obtenu est ensuite déshydraté, la teneur en matières sèches étant portée à plus de 90%.

Cette déshydratation est réalisée à une température évitant la coagulation des protéines.

Dans le cas d'une matière première à base d'oeufs, la température de déshydratation sera ainsi inférieure à 58°C qui est la température de coagulation des protéines des oeufs.

En effet, la coagulation entraîne la formation d'agrégats compacts où l'eau est fortement liée ce qui entraîne un processus de déshydratation long et incomplet, le produit obtenu n'ayant par ailleurs pas la porosité suffisante qui permettrait une réhydratation rapide.

Selon une variante du procédé selon l'invention, la déshydratation est réalisée par microondes sous pression réduite ce qui permet de contrôler les conditions de foisonnement du produit.

En effet, dans le cas d'une déshydratation par microondes le foisonnement du produit est déterminé par la température d'entrée du produit, et la pression régnant dans l'enceinte à microondes.

Il est clair que plus la température d'entrée est importante, plus la viscosité du produit est faible et moins le foisonnement sera important. Ainsi, pour un mélange ayant la composition suivante :

|  | Masse (%) |
|---|---|
| Jaune d'oeuf salé | 39,82 |
| Jaune d'oeuf en poudre | 17,26 |
| Blanc d'oeuf en poudre | 16,72 |
| Lait écrémé | 10.09 |
| Eau | 16,11 |

Si la déshydratation est réalisée à une pression réduite de 1333 Pa, à un débit horaire de 20 kg/h, avec une puissance microondes de 6,5 kw, le tableau ci-dessous montre l'évolution de la densité du produit fini en fonction de la température d'entrée du produit.

| Température d'entrée du produit | dimensions de la couche de produit | | matière sèche finale (%) | Densité | |
|---|---|---|---|---|---|
| | hauteur | largeur | | non tassé | tassé |
| 30°C ± 1 | 4 cm | 30 cm | 94,49 | 0,205 | 0,227 |
| 40°C ± 1 | 3,5 cm | 25 cm | 96,87 | 0,241 | 0,260 |

On voit ainsi clairement que, l'augmentation de la température diminuant la viscosité, le foisonnement est moindre d'où un accroissement de la densité du produit.

Par ailleurs, le foisonnement plus faible diminue la surface d'échange entre le produit et l'air ambiant, ceci augmente donc la température de séchage et donc le rendement évaporatoire ce qui entraîne une teneur en matières sèches plus élevée dans le produit final.

Par ailleurs, le tableau ci-dessous illustre l'influence de la pression résiduelle dans l'enceinte à microondes sur la teneur en matières sèches finale et sur la température de séchage, pour un mélange identique au mélange indiqué ci-avant, pour une température d'entrée de 30°C et une puissance microondes de 6,5 kw.

| pression dans l'enceinte | | dimensions de la couche de produit (cm) | | température de séchage (°C) | matière sèche finale (%) |
|---|---|---|---|---|---|
| mm Hg | Pa | hauteur | largeur | | |
| 7 | 933 | 3 | 25 | 54 | 98,22 |
| 10 | 1333 | 4 | 25 | 49 | 96,78 |
| 20 | 2666 | 4 à 5 | 35 | 44 | 96,14 |
| 40 | 5333 | 6 à 7 | 45 | 42 | 95,21 |

Or, comme dit précédemment, la température de séchage est inversement proportionnelle au foisonnement qui, augmentant la surface d'échange, favorise le refroidissement.

Il apparaît ainsi clairement que, plus la pression résiduelle est élevée, plus le foisonnement est important. Plus particulièrement, il apparaît qu'à 5333 Pa le foisonnement est 4 fois plus important qu'à 933 Pa.

En agissant sur la température d'entrée et sur la pression dans l'enceinte microondes il est donc effectivement possible d'obtenir le foisonnement, et donc la porosité, désiré.

Préférablement, les conditions de déshydratation par microondes pourront être une température d'entrée du produit voisine de 50°C, afin d'augmenter le rendement évaporatoire, et une pression inférieure à 1333 Pa.

Le produit une fois déshydraté, présentant une teneur en matière sèche supérieure à 90%, préférentiellement entre 94% et 97%, peut être réduit en morceaux par concassage puis granulation et tamisage aux dimensions désirées.

Le produit est ensuite coagulé.

Le produit sec, à température ambiante, est soumis à un flux d'air humide à une température sèche supérieure à 100°C.

Il y a un échange d'énergie thermique entre le produit et l'air qui cède une partie de son énergie pour réchauffer le produit.

L'eau présente dans l'air humide condense sur le produit déshydraté. Cette condensation, qui apporte l'eau nécessaire à la coagulation des protéines, est réalisée jusqu'à ce que la température du produit soit égale au point de rosée de l'air humide.

Plus le point de rosée et l'humidité relative sont élevées plus la condensation de vapeur d'eau est importante.

De même, plus la température du produit est faible plus la condensation est importante.

Lors de cette condensation, le poids d'eau condensée représente entre 1% et 15% du poids du produit traité, cette quantité d'eau étant suffisante pour autoriser la coagulation des protéines.

La coagulation des protéines est obtenue si la condensation de l'eau correspond à une température de rosée suffisante.

Le degré de coagulation du produit est donc déterminé par les caractéristiques de l'air humide utilisé.

Un air humide ayant un point de rosée de 70°C entraînera un produit peu coagulé, un air humide ayant un point de rosée de 100°C entraînera un produit fortement coagulé.

En utilisant de l'air humide sous pression il est même possible d'avoir des points de rosée supérieurs à 100°C.

A la fin de la phase de condensation la température du produit est à la température de rosée de l'air.

Le produit reçoit alors de l'énergie par l'air chaud, sa température s'élevant jusqu'à la température humide.

Il faut remarquer que cette phase de réchauffage est quasiment inexistante lorsque l'humidité relative de l'air est élevée. En effet, les températures humide et de rosée sont alors très proches.

Lorsque la température humide a été atteinte, le produit reste à cette température tant que l'activité de l'eau de condensation est égale à 1. Puis, le produit séchant, il s'établit un équilibre entre l'activité de l'eau du produit et l'humidité relative de l'air.

La température du produit s'élève jusqu'à la température sèche de l'air humide.

Les exemples suivants illustrent la mise en oeuvre du procédé selon l'invention.

Exemple 1 :

Un mélange ayant la composition suivante a été déshydraté :

|  | Masse (%) |
|---|---|
| Jaune d'oeuf salé | 39,82 |
| Jaune d'oeuf en poudre | 17,26 |
| Blanc d'oeuf en poudre | 16,72 |
| Lait écrémé | 10,09 |
| Eau | 16,11 |

Le produit obtenu présente une teneur en matière sèche de 97% et a la composition suivante :

|  | Masse (%) |
|---|---|
| Jaune d'oeuf | 54,08 |
| Blanc d'oeuf | 24,59 |
| Lait écrémé | 15,76 |
| Sel | 2,57 |
| Eau | 3,00 |

Le produit a ensuite été réduit en morceaux de 1 à 2 cm.

Puis il a été coagulé à l'air humide jusqu'à obtenir un taux coagulation correspondant à celui des oeufs brouillés.

Le produit a présenté une conservation excellente. Même après 12 mois à 20°C le produit garde un goût d'oeuf frais, sa couleur n'est pas altérée, ni par décoloration ni par brunissement.

Le produit se réhydrate instantanément dans l'eau bouillante.

La saveur du produit est franche.

Exemple 2 :

Un isolat délipidé de protéines de soja a été déshydraté jusqu'à une teneur en matière sèche de 93,55% et a été traité, par de l'air humide ayant une température sèche de 120°C, pendant 30 secondes, à une température humide de 80°C.

Le produit a alors présenté un rapport azote soluble/azote total de 22,3%, à comparer à un rapport azote soluble/azote total de 38,3% pour le produit non coagulé, le rapport azote soluble/azote total étant caractéristique du degré de coagulation.

Ainsi, 42% des protéines solubles ont été coagulées.

Exemple 3 :

Un isolat délipidé de protéines de soja identique à celui de l'exemple précédent, a été traité dans les mêmes conditions mais à une température humide de 96°C.

Le produit a alors présenté un rapport azote soluble/azote total, a été de 10,0%, 76% des protéines solubles ayant coagulés.

azote total, a été de 10,0%, 76% des protéines solubles ayant coagulés.

Les exemples comparatifs suivants illustrent les insuffisances des procédés consistant soit à sécher un produit coagulé, soit à essayer de coaguler un produit déshydraté en n'employant pas de l'air humide.

Exemple 4 :

Des protéines de pois sous forme pulvérulente ont été disposées sur un tamis, en couche mince afin de permettre le passage de l'air humide.

Les conditions expérimentales sont les suivantes :

| - charge par plateaux | 0,300 kg |
|---|---|
| - épaisseur de la couche de produit | 2 à 3 mm |
| - vitesse air humide | 1,2 m/s |
| - température sèche de l'air | 140°C |
| - temps de traitement | 30 s |

Trois séries d'essais ont été réalisées en faisant varier la teneur en matières sèches du produit et la température humide de l'air.

La coagulation des protéines est évaluée par le rapport azote soluble/azote total (NS/NT).

Le tableau ci-dessous indique, en pourcentage, le rapport (NS/NT) en fonction des conditions de traitement.

| Teneur en matières sèches du produit (%) | Témoin | Température humide de l'air | | | |
|---|---|---|---|---|---|
| | | 80°C | 85°C | 90°C | 95°C |
| | | Azote soluble/azote total | | | |
| 94,90 | 33,4 | 33,5 | 33,2 | 31,5 | 32,6 |
| 90,46 | 33,6 | 32,9 | 33,2 | 32,2 | 30,7 |
| 86,06 | 32,9 | 32,7 | 31,6 | 30,8 | 30,5 |

On voit donc clairement que :
- La coagulation est d'autant plus importante que la teneur en matières sèches est plus faible.
- La coagulation des protéines de pois ne se produit qu'à partir d'une température humide supérieure ou égale à 85°C.

Une coagulation des protéines de pois plus poussées nécessite l'utilisation de vapeur surchauffée sous pression où la température de condensation est supérieure ou égale à 100°C.

Exemple comparatif 1 :

Un mélange à base d'oeuf est mis à chauffer dans une bassine jusqu'à obtention de la coagulation. Lorsque la coagulation désirée est atteinte, le produit est disposé sur des plateaux, l'épaisseur maximale de la couche de produit est de 2 cm.

Ces plateaux sont disposés dans une étuve sous vide.

La température de chauffage est de 80°C et la pression absolue de 20 mm de Hg.

Le temps de séchage nécessaire à la déshydratation du produit est de 9 heures.

Le produit obtenu ne présente pas les caractéristiques voulues, il est compact et nécessite plusieurs minutes de cuisson avant sa consommation.

Exemple comparatif 2 :

Un mélange à base d'oeuf est mis à chauffer dans une bassine jusqu'à obtention de la coagulation. Lorsque la coagulation désirée est atteinte, le produit est disposé sur des plateaux, l'épaisseur maximale de la couche de produit est de 2 cm.

EP 0 469 176 B1

Les plateaux sont disposé dans un sécheur à air chaud.
Les conditions de séchage sont :

| | |
|---|---|
| - température de l'air | 60 °C |
| - vitesse de l'air | 2,5 m/s |
| - humidité relative | 10% |

Après 1 heure de traitement, le produit est croûté, le produit ne sèche plus, l'intérieur des morceaux reste humide.

Le produit obtenu est insuffisamment sec, la croûte formée empêche la migration de l'eau.

Exemple comparatif 3 :

Un produit sec obtenu par le séchage microondes d'un mélange à base d'oeufs est traité par l'air chaud pour coaguler les protéines.

La température sèche de l'air est ajustée à une valeur supérieure à la température de coagulation des protéines de l'oeuf.

Exemple de conditions de traitement :

| | |
|---|---|
| - température sèche | 120 °C |
| - humidité relative | 5% |
| - vitesse de l'air | 2,5 m/s |

Après 5 mn de traitement, le produit présente un début de brunissement, sa teneur en matières sèches est supérieure à 98,5%.

Au cours de la réhydratation du produit obtenu, les protéines se solubilisent dans l'eau, ce traitement n'a pas provoqué la coagulation des protéines.

Exemple comparatif 4 :

Un mélange à base d'oeufs est déshydraté et coagulé par microondes.

Au cours du traitement la pression est maintenue à 80 mm de Hg, la température du produit atteint 70 °C.

La coagulation des protéines est obtenue, mais le produit se présente sous forme d'agglomérats compacts.

Le produit sec ne présente pas les caractéristiques voulues.

**Revendications**

1. Procédé d'obtention d'un produit coagulé déshydraté, dans lequel on déshydrate la matière première dans les conditions propres à lui conférer une structure poreuse et jusqu'à obtention d'une teneur en matière sèche de plus de 90%, puis on coagule la matière déshydratée par traitement à l'air humide en conservant intacte sa porosité initiale.

2. Procédé selon la revendication 1 dans lequel la déshydratation est réalisée par un traitement dans une enceinte microondes sous pression réduite.

3. Procédé selon la revendication 2 dans lequel la température d'entrée de la matière première et la pression dans l'enceinte microondes sont régulées en fonction de la porosité désirée.

4. Procédé selon la revendication 3 dans lequel la température d'entrée du produit est de 50 °C et la pression dans l'enceinte microondes est inférieure à 1333 Pa.

5. Procédé selon la revendication 1 dans lequel la température de rosée de l'air humide est choisie en fonction du degré de coagulation du produit final désiré.

7

6. Application du procédé selon l'une des revendications précédentes à l'obtention d'un produit coagulé déshydraté à base d'oeufs ou de protéines de légumineuses.

## Claims

1. A process for the production of a coagulated and dehydrated product, in which the starting material is dehydrated under conditions designed to give it a porous structure until a dry matter content of more than 90% is obtained, after which the dehydrated material is coagulated by treatment with humid air, its initial porosity being kept intact.

2. A process as claimed in claim 1, in which dehydration is carried out by treatment in a microwave enclosure under reduced pressure.

3. A process as claimed in claim 2, in which the entry temperature of the starting material and the pressure in the microwave enclosure are regulated in dependence upon the desired porosity.

4. A process as claimed in claim 3, in which the entry temperature of the product is 50°C and the pressure in the microwave enclosure is below 1,333 Pa.

5. A process as claimed in claim 1, in which the dew point of the humid air is selected as a function of the degree of coagulation of the desired end product.

6. Application of the process claimed in any of the preceding claims to the production of a coagulated and dehydrated product based on eggs or pulse proteins.

## Patentansprüche

1. Verfahren zur Gewinnung eines entwässerten koagulierten Produkts, bei dem man das Ausgangsmaterial unter Bedingungen, die geeignet sind, diesem eine poröse Struktur zu verleihen, bis auf einen Trockenmassegehalt von mehr als 90 % entwässert, wonach man das entwässerte Material durch Behandlung mit feuchter Luft koaguliert, wobei man die Ausgangsporosität intakt beibehält.

2. Verfahren nach Anspruch 1, bei dem man die Entwässerung durch Behandlung in einem Mikrowellenraum bei vermindertem Druck bewirkt.

3. Verfahren nach Anspruch 2, bei dem man die Anfangstemperatur des Ausgangsmaterials und den Druck im Mikrowellenraum in Abhängigkeit von der gewünschten Porosität einstellt.

4. Verfahren nach Anspruch 3, bei dem die Anfangstemperatur des Ausgangsmaterials 50°C beträgt und der Druck im Mikrowellenraum unter 1333 Pa liegt.

5. Verfahren nach Anspruch 1, bei dem die Taupunktstemperatur der feuchten Luft in Abhängigkeit vom gewünschten Koagulationsgrad des Endprodukts gewählt wird.

6. Anwendung des Verfahrens nach einem der vorausgehenden Ansprüche zur Gewinnung eines entwässerten koagulierten Produkts auf der Basis von Eiern oder von Leguminosenproteinen.